# EUROPEAN PATENT APPLICATION

(11) **EP 4 495 917 A1**
(43) Date of publication of application: **22.01.2025**
(21) Application number: 24179834.7
(22) Date of filing: 04.06.2024
(51) Int. Cl.: G09B 5/02, G09B 7/02, G09B 7/077, G09B 7/10

(54) **LEARNING SUPPORT DEVICE, LEARNING SUPPORT METHOD, AND LEARNING SUPPORT PROGRAM**

(30) Priority: 20.07.2023 JP 2023118246
(71) Applicant: OMRON Corporation, Kyoto 600-8530 (JP)
(72) Inventor: OTA, Hirofumi, Kyoto, 617-0002 (JP); ARAKI, Sakuya, Kyoto, 617-0002 (JP); HIRAI, Yoshihiro, Kyoto, 617-0002 (JP); AKINO, Yusuke, Kyoto, 617-0002 (JP)
(74) Representative: Becker, Eberhard

(57) **Abstract**

Learning guidance tailored to personality, etc., of a user is provided to improve learning efficiency of the user.

A transition acquisition section (11c) acquires transition of answer status of a user to questions on a test based on operation history information indicating a history of input operations performed by the user on a terminal (2) when the user takes the test. An understanding level estimation section (11b) estimates level of understanding of the user of the respective questions on the test using scoring results of answers of the user. A guidance generation section (11d) generates guidance regarding learning guidance for the user based on the transition of the answer status of the user acquired by the transition acquisition section (11c) and the level of understanding of the respective questions on the test estimated by the understanding level estimation section (11b).

## Description

### BACKGROUND

### Technical Field

The disclosure relates to a technique for generating guidance for a user based on the level of understanding of the user, etc.

### Description of Related Art

Conventionally, a user has been made to operate an information processing terminal (hereinafter simply referred to as a terminal) to learn or take a test. For example, one type of test that evaluates knowledge and academic ability (level of understanding) of a user is called Computer Based Testing (CBT), which is based on the scoring results of a test that the user takes by operating a terminal. In CBT, questions on a test are displayed on a screen of a display of a terminal operated by a user who is a test taker. The user answers the questions on the test displayed on the screen of the display at the terminal (inputs the answers into question answer columns). The level of understanding of the user is estimated based on the scoring results of the answers of the user. The terminal used in CBT are commonly used personal computers, tablet terminals, etc.

It has also been proposed to estimate the level of understanding of the user not only from the scoring results of answers, but also from the time taken to answer questions, the order in which answers were given, and the like (see Patent Literature 1 (Japanese Patent Application Laid-Open No. 2019-152782)). Further, the device of Patent Literature 1 counts the number of stumbles when answering based on a change in the answer input speed (number of strokes per unit time), and uses the counted number of stumbles to estimate the level of understanding of the user.

However, with conventional techniques, learning guidance for a user that takes into account the behavior of the user during the test has not been able to be provided. The behavior of the user during the test refers to, for example,
(1) At the beginning of the test, whether or not an action has been taken to understand the contents of all the questions being asked,
(2) Whether or not an action has been taken to review answers,
(3) Whether or not an action has been taken to modify the answers when reviewing the answers.

The personality etc., of the user are reflected in the behavior of the user during the test. Therefore, learning guidance that takes into account the behavior of the user during the test is tailored to the personality, etc., of the user.

The disclosure provides a technique capable of providing learning guidance tailored to the personality, etc., of a user and improving the learning efficiency of the user.

### SUMMARY

A learning support device of the disclosure is configured as follows.

The learning support device is applied to a system in which a user operates a terminal and takes a test having multiple questions.

A transition acquisition section acquires transition of answer status of the user to the questions on the test based on operation history information indicating a history of input operations performed by the user on the terminal when the user takes the test. For example, the operation history information includes a question selection operation that switches a question on the test that is being focused on and a character input operation that inputs a character string into an answer column of the question on the test that is being focused on. The transition acquisition section acquires, for example, whether or not the user has reviewed the answer, whether or not the answer has been modified at the time of review, whether or not a confirmation procedure has been carried out to understand contents of all the questions on the test before starting to answer the questions on the test as the transition of the answer status of the user to the questions on the test. In other words, the transition of the answer status of the user to the questions on the test acquired by the transition acquisition section represents the behavior of the user during the test.

In addition, an understanding level estimation section estimates level of understanding of the user of the respective questions on the test using scoring results of answers of the user.

Further, a guidance generation section generates guidance regarding learning guidance for the user based on the transition of the answer status of the user acquired by the transition acquisition section and the level of understanding of the respective questions on the test estimated by the understanding level estimation section.

According to the configuration, the behavior of the user during the test is acquired from the transition of the answer status of the user to the questions on the test. Furthermore, the personality etc., of the user are reflected in the behavior of the user during the test. In other words, learning guidance that takes into account the behavior of the user during the test is tailored to the personality, etc., of the user. Therefore, learning guidance tailored to the personality, etc., of the user can be provided, and learning efficiency of the user can be improved.

In addition, for example, for a question for which the user has reviewed the answer and modified the answer during the review, the guidance generation section may generate guidance regarding learning guidance for the user using also the scoring results of the answers before the modification. With the configuration, the types of mistakes (miscalculations, misreading of the question text, mistakes in writing the answer, etc.) that the user tends to make when answering a question can be determined. In this way, learning guidance about the mistakes the user tends to make when answering questions may also be provided to the user.

Further, the understanding level estimation section may estimate the level of understanding of the user of the questions on the test using the order of the user answering the questions on the test and the answer time of the questions on the test. With the configuration, the level of understanding of questions in field in which the user feels weak can be determined. Additionally, learning guidance about the questions in field in which the user feels weak may also be provided to the user.

### BRIEF DESCRIPTION OF THE DRAWINGS

FIG. 1 is a schematic diagram showing an example of a network system for performing a test using a Computer Based Testing (CBT) method.
FIG. 2 is a diagram showing an example of a screen of a display of a user terminal on which a question on the test is displayed.
FIG. 3 is a diagram showing an example of a screen of a display of a user terminal on which a question on the test is displayed.
FIG. 4 is a block diagram showing the configuration of the main sections of the server device of the example.
FIG. 5 is a block diagram showing the configuration of the main sections of the user terminal of the example.
FIG. 6 is a flowchart showing the operation of the user terminal in the example.
FIG. 7 is a flowchart showing the operation of the server device in the example.

### DESCRIPTION OF THE EMBODIMENTS

According to the disclosure, learning guidance tailored to the personality, etc., of the user can be provided, and learning efficiency of the user can be improved.

Hereinafter, an embodiment of the disclosure will be described.

### <1. Application example>

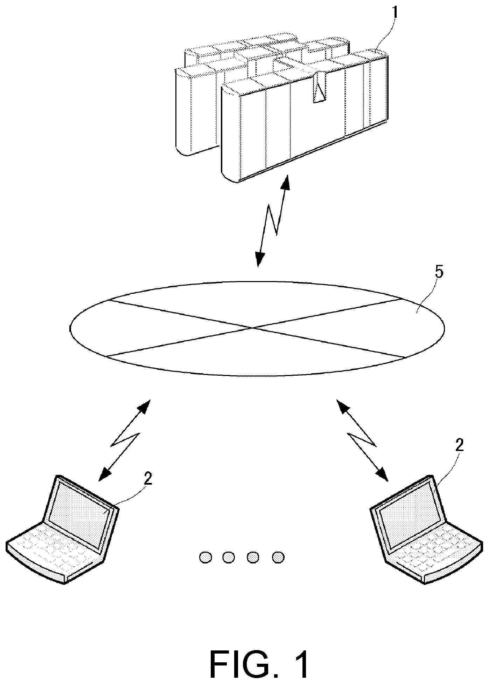

FIG. 1 is a schematic diagram showing a network system for performing a test using a Computer Based Testing (CBT) method. As shown in FIG. 1, the network system of the example has a configuration in which multiple user terminals 2 are connected to a server device 1 via a network 5 for data communication. The example is an example in which the learning support device according to the disclosure is applied to the server device 1.

As described in a modified example below, the learning support device according to the disclosure may further be applied to the user terminal 2 instead of the server device 1.

In the example, the server device 1 distributes a test having multiple questions to the user terminal 2. For example, the number of questions on the test is five, question 1 is a question about polynomials, question 2 is a question about simultaneous equations, question 3 is a question related to geometry, question 4 is a question related to trigonometric functions, and question 5 is a question related to probability.

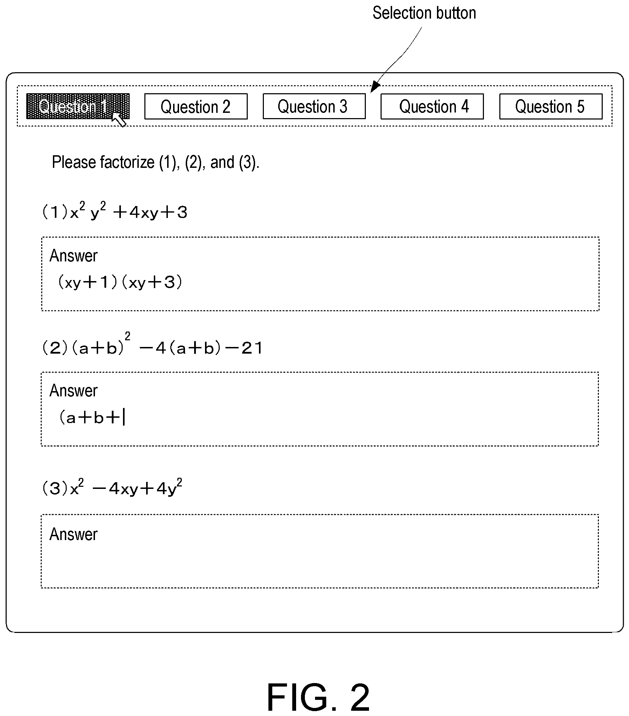

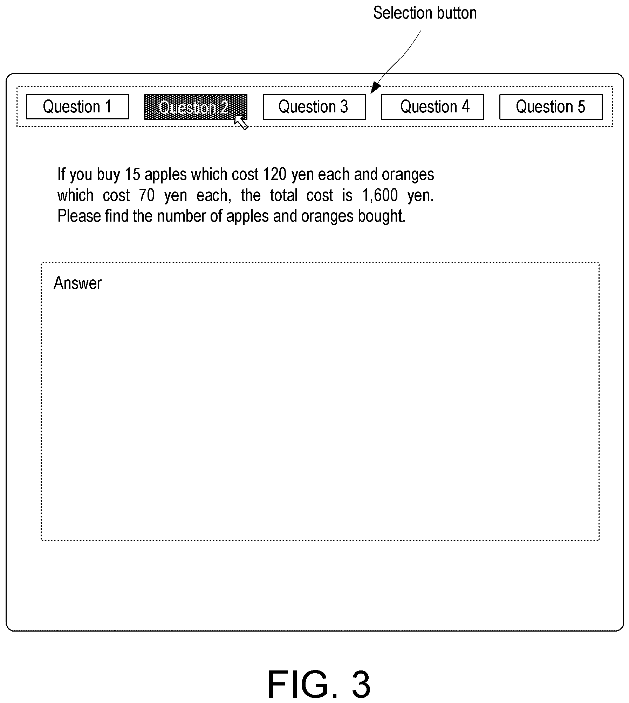

The user terminal 2 displays the questions on the test distributed from the server device 1 on a screen of a display. FIGS. 2 and 3 are diagrams showing examples of a screen of a display of a user terminal on which a question on the test is displayed. The question selected at the moment is displayed on the screen of the display of the user terminal 2. When question 1 is selected on the user terminal 2, question 1 is displayed on the screen of the display of the user terminal 2, as shown in FIG. 2. Furthermore, when question 2 is selected on the user terminal 2, question 2 is displayed on the screen of the display of the user terminal 2, as shown in FIG. 3. Although not shown in particular, when question 3 is selected on the user terminal 2, question 3 is displayed on the screen of the display of the user terminal 2, when question 4 is selected on the user terminal 2, question 4 is displayed on the screen of the display of the user terminal 2, and when question 5 is selected on the user terminal 2, question 5 is displayed on the screen of the display of the user terminal 2.

The user terminal 2 switches the questions (selected question) to be displayed on the screen of the display according to the operation on the selection buttons (the five buttons for questions 1 to 5 shown in FIGS. 2 and 3) displayed on the screen of the display. In other words, the user can display desired questions (questions 1 to 5) on the screen of the display of the user terminal 2 by operating the selection button. In the example, the question displayed on the screen of the display by the user terminal 2 corresponds to the focused question as referred to in the disclosure.

The user terminal 2 makes the display format of the selection button for the currently selected question different (FIGS. 2 and 3 are examples of highlighting the selection button) from the display format of the selection button for other questions (questions not selected at the moment).

Note that the selection operation and display format of the questions on the test on the user terminal 2 described above are merely examples.

The user terminal 2 generates a history of input operations of the user during the test time (the period from the start to the end of the test) as operation history information. The operation history information is information on input operations accumulated during the test time. The input operation information includes an operation code indicating the content of the input operation performed by the user, and time information (time stamp) indicating the time when the input operation was performed. The input operations of the user include, for example, operating a selection button to select a question, inputting characters into an answer column (operation of character keys), and deleting characters input into the answer column (operation of the delete key).

When the test is completed, the user terminal 2 transmits the answer to each of the questions (the character strings input into the answer column of each of the questions at the end of the test) and the operation history information generated during the test time to the server device 1.

The server device 1 scores the answer of the user for each of questions on a test. Furthermore, the server device 1 acquires the transition of answer status of the user to the questions on the test based on the operation history information.

The server device 1 acquires, for example,
(1) Order of answers to questions on a test,
(2) Answer time for each of the questions,
(3) At the beginning of the test, whether or not an action has been taken to understand the contents of all the questions being asked,
(4) For each of the questions, whether or not the answer has been reviewed (whether or not a review is present), and
(5) For each of the questions, whether or not the answer has been modified during the review (whether or not a modification is present), etc.
as the transition of the answer status of the user.

The above (1) can be used to estimate the field of the question that the user feels weak. For example, the server device 1 acquires the order in which the time when the n-th character (n is a positive integer and is a predetermined value (n is, for example, 1 to 5)) was input into the corresponding answer column is the earliest as the order in which the questions are answered.

The above (2) can be used to estimate the level of understanding of the user of the question. For example, the server device 1 acquires, for each of the questions, the total time during which the question was selected (the time that the question was focused) as the answer time of the question.

The above (3) to (5) can be used to determine behavior of the user during the test. Regarding the above (3), for example, before character strings are input into the answer columns of all questions, when all the questions have been selected by the selection buttons, the server device 1 determines that the user has performed an action to understand the contents of all the questions on the test before starting to answer the questions. Regarding the above (4), for example, when a question is selected, if the number of characters in the character string input into the answer column of the question exceeds a predetermined number, the server device 1 determines that the question selected this time is a question of which answer has been reviewed. Regarding the above (5), for example, when a question is selected, if the number of characters in the character string input into the answer column of the question exceeds the predetermined number, and an input operation is performed to delete some characters from a character string that has already been input, the server device 1 determines that the question has been modified at the time of reviewing the answer.

Note that the server device 1 is not limited to the items (1) to (5) described above, and may also acquire other items as the transition of the answer status of the user. The server device 1 may be configured not to acquire some of the above items (1) to (5) as the transition of the answer status of the user.

The server device 1 scores the answer for each of the questions and estimates the level of understanding of the user using the scoring result of the question. The scoring of the answers may be done, for example, by a point subtraction method or a point addition method, by other methods, or even by a scoring method that utilizes Artificial Intelligence (AI).

In addition, the server device 1 generates guidance regarding learning guidance for the user based on the transition of the answer status of the user and the level of understanding of each of the questions. The server device 1 acquires the behavior of the user during the test from the transition of the answer status of the user. The personality etc., of the user are reflected in the behavior of the user during the test. In other words, learning guidance that takes into account the behavior of the user during the test is tailored to the personality, etc., of the user. Therefore, learning guidance tailored to the personality, etc., of the user can be provided, and learning efficiency of the user can be improved.

Note that the server device 1 may be configured to transmit the generated guidance on the learning guidance for the user to the user terminal 2 or to print out the generated guidance on the learning guidance for the user. The server device 1 may have any configuration as long as the server device 1 is configured to output the generated guidance on the learning guidance for the user in a form that can be used for learning guidance to the user. For example, instead of the user himself/herself, the generated guidance on the learning guidance for the user may be output to an instructor (such as a teacher) who provides learning guidance to the user.

### <2. Configuration example>

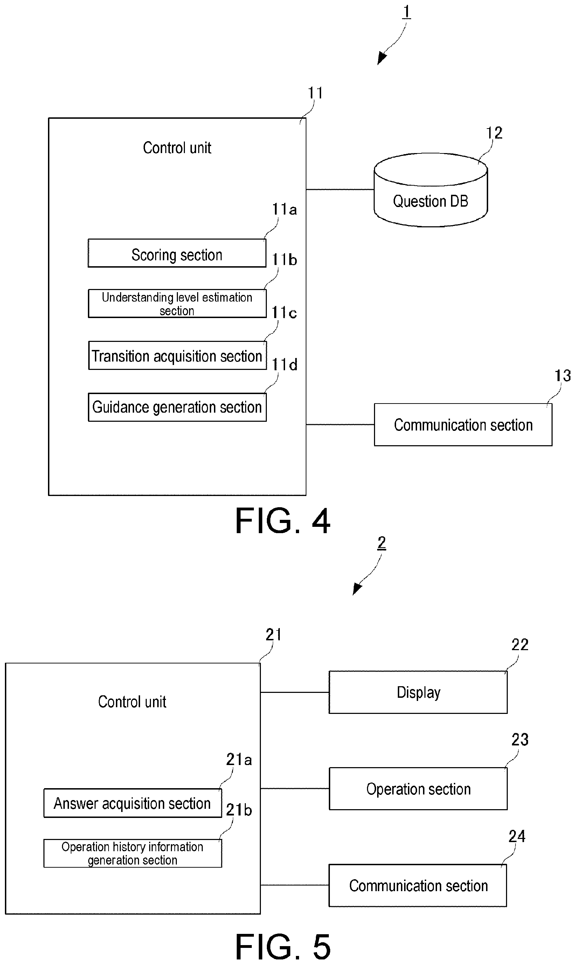

FIG. 4 is a block diagram showing the configuration of the main sections of the server device of the example. The server device 1 includes a control unit 11, a question database 12 (question DB 12), and a communication section 13.

The control unit 11 controls each section of the main body of the server device 1. The control unit 11 further includes a scoring section 11a, an understanding level estimation section 11b, a transition acquisition section 11c, and a guidance generation section 11d. The scoring section 11a, the understanding level estimation section 11b, the transition acquisition section 11c, and the guidance generation section 11d included in the control unit 11 will be described later.

The question DB 12 is a database in which questions on a test to be distributed to the user terminal 2 operated by the user are registered. Further, in the example, the correct answer (model answer) and standard answer time for each of questions on a test are registered in association with each other in the question DB 12.

The communication section 13 performs data communication via the network 5 with the user terminal 2 operated by the user. The server device 1 distributes a test having multiple questions to the user terminal 2. Further, the server device 1 receives the answer to each of the questions of the test from the user terminal 2. The server device 1 also receives, from the user terminal 2, operation history information indicating a history of input operations performed on the user terminal 2 by the user when taking the test. The operation history information is information on input operations accumulated during the test time. The input operation information includes an operation code indicating the content of the input operation performed by the user, and time information (time stamp) indicating the time when the input operation was performed.

Next, the scoring section 11a, the understanding level estimation section 11b, the transition acquisition section 11c, and the guidance generation section 11d included in the control unit 11 will be described.

The scoring section 11a scores the answer of the user for each of the questions on the test. The scoring section 11a may score using a point subtraction method or a point addition method, or may score using other methods.

The understanding level estimation section 11b estimates the level of understanding of the user for each of the questions based on the scoring result of the question. Further, the understanding level estimation section 11b may be configured to estimate the level of understanding of the user for each of the questions using the scoring result of the question, the answer time of the user, and the standard answer time.

The transition acquisition section 11c acquires the transition of the answer status of the user in the test based on the operation history information received from the user terminal 2. The transition acquisition section 11c acquires, for example,
(1) Order of answers to questions on a test,
(2) Answer time for each of the questions,
(3) At the beginning of the test, whether or not an action has been taken to understand the contents of all the questions being asked,
(4) For each of the questions, whether or not the answer has been reviewed (whether or not a review is present), and
(5) For each of the questions, whether or not the answer has been modified during the review (whether or not a modification is present), etc.
as the transition of the answer status of the user.

The guidance generation section 11d generates guidance regarding learning guidance for the user based on the transition of the answer status of the user and the level of understanding of the respective questions.

The control unit 11 of the server device 1 is composed of a hardware CPU, memory, and other electronic circuits. When executing an evaluation program according to the disclosure, the hardware CPU operates as the scoring section 11a, the understanding level estimation section 11b, the transition acquisition section 11c, and the guidance generation section 11d. The memory also has an area for developing the evaluation program according to the disclosure and an area for temporarily storing data and the like generated during execution of the evaluation program. The control unit 11 may be an LSI that integrates a hardware CPU, memory, and the like. Further, the hardware CPU is a computer that executes an evaluation method according to the disclosure.

FIG. 5 is a block diagram showing the configuration of the main sections of the user terminal of the example. The user terminal 2 includes a control unit 21, a display 22, an operation section 23, and a communication section 24.

The control unit 21 controls the operation of each of the sections of the main body of the user terminal 2. The control unit 21 further includes an answer acquisition section 21a and an operation history information generation section 21b. The answer acquisition section 21a and the operation history information generation section 21b of the control unit 21 will be described later.

The display 22 displays questions on a test distributed from the server device 1, answers to questions input by the user, and the like.

The operation section 23 detects an input operation of the user. The operation unit 23 may be configured to accept character input via a hardware keyboard or a software keyboard. The operation section 23 further has a pointing device such as a mouse, and accepts an operation (an operation to press a selection button) to select a question to be displayed on the display 22.

The communication section 24 performs data communication with the server device 1 via the network 5.

Next, the answer acquisition section 21a and the operation history information generation section 21b included in the control unit 21 will be described.

At the end of the test, the answer acquisition section 21a acquires the character string input into the answer column of a question as the answer of the user to the question.

The operation history information generation section 21b generates operation history information by accumulating operation information on input operations performed by the user on the operation section 23. The operation information includes an operation code that identifies an input operation by the user and an operation time when the user performed the input operation. The input operations performed by the user include inputting characters into the answer column of a question, deleting characters input into the answer column, and selecting a question to be displayed on the display 22.

The control unit 21 of the user terminal 2 is composed of a hardware CPU, memory, and other electronic circuits. The hardware CPU operates as the answer acquisition section 21a and an operation history information generation section 21b. The control unit 21 may be an LSI that integrates a hardware CPU, memory, and the like.

### <3. Operation example>

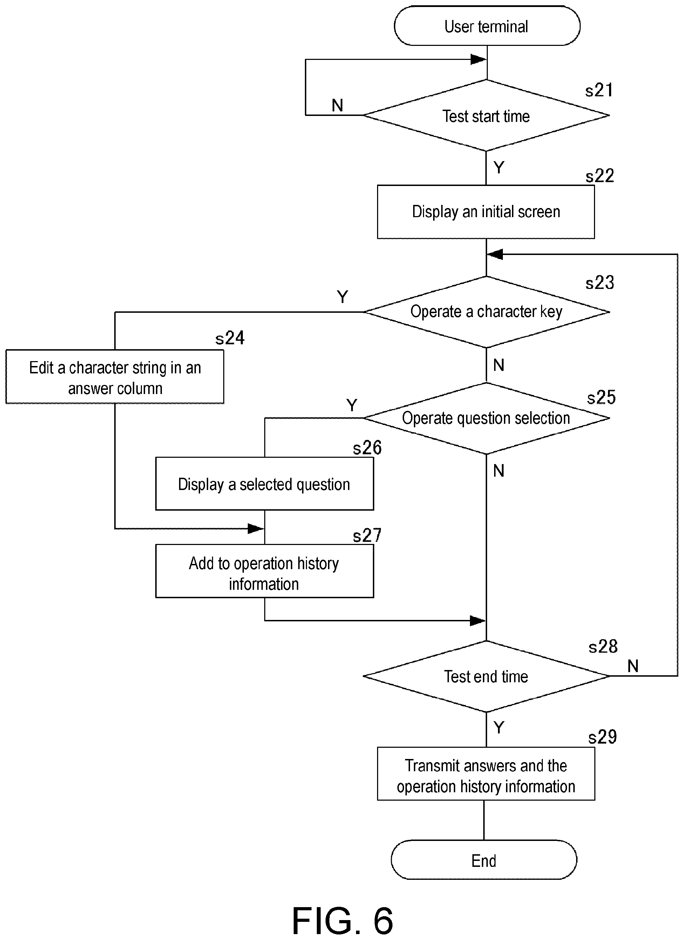

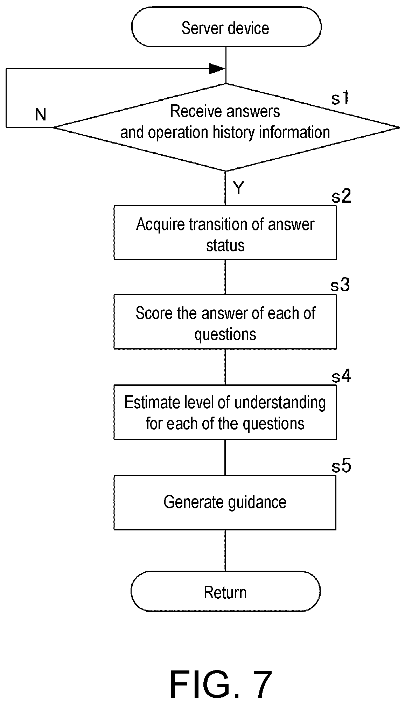

FIG. 6 is a flowchart showing the operation of the user terminal in the example. FIG. 7 is a flowchart showing the operation of the server device in the example.

In the example, the server device 1 distributes questions on a test to the user terminal 2 before the beginning of the test.

When the test start time comes, the user terminal 2 displays an initial screen on the screen of the display 22 (s21 and s22). The initial screen may be, for example, a screen displaying question 1, or a screen displaying merely selection buttons for selecting a question.

If the user operates a character key or the delete key on the operation section 23, the user terminal 2 edits the character string in the answer column according to the operated character key (s23 and s24). Furthermore, if the operation of the user on the operation section 23 is an operation of selecting a question (an operation of pressing a selection button), the user terminal 2 displays the question selected this time on the screen of the display 22 (s25 and s26).

After performing the processing related to s24 or s26, the user terminal 2 adds operation information including an operation code indicating the content of the input operation of the user this time and the time when the input operation was performed to the operation history information (s27). The user terminal 2 stores the operation history information in the memory included in the control unit 21. Further, the user terminal 2 stores, for each of the questions on the test, the character string input into the answer column of the question in the memory included in the control unit 21.

The user terminal 2 repeats the processing related to s23 to s27 described above until the end time of the test is reached. When the end time of the test is reached (s28), the user terminal 2 transmits the answer to each of the questions and the operation history information stored in the memory to the server device 1 (s29), and ends the processing.

Next, the operation of the server device 1 will be described with reference to FIG. 7. The server device 1 waits to receive the answers to the questions on the test and the operation history information during the test time from the user terminal 2 (s1). The transition acquisition section 11c acquires the transition of the answer status of the user during the test based on the operation history information during the test time received from the user terminal 2 (s2).

In s2, for example,
(1) Order of answers to questions on a test,
(2) Answer time for each of the questions,
(3) At the beginning of the test, whether or not an action has been taken to understand the contents of all the questions being asked,
(4) For each of the questions, whether or not the answer has been reviewed (whether or not a review is present), and
(5) For each of the questions, whether or not the answer has been modified during the review (whether or not a modification is present), etc.
are acquired as the transition of the answer status of the user in the test.

The scoring section 11a scores the answer of the user for each of the questions on the test (s3). The understanding level estimation section 11b estimates the level of understanding of the user for each of the questions on the test using the scoring result by the scoring section 11a, the answer time of the user, and the standard answer time for the question (s4).

Note that the understanding level estimation section 11b may estimate the level of understanding of the user for each of the questions on the test without using the answer time of the user for the question (using merely the scoring results of the scoring section 11a).

The guidance generation section 11d generates the guidance of learning guidance for the user (s5) based on the transition of the answer status of the user acquired in s2 and the level of understanding of each of the questions estimated in s4.

In s5, for example, based on the transition of the answer status of the user acquired in s2, the field of questions in which the user feels weak is estimated. The field of questions in which the user feels weak can be determined from the order of answering the questions on the test and the time difference between the answer time of the user and the standard answer time. If the order of answering the questions on the test is late and the time (time difference) acquired by subtracting the standard answer time from the answer time of the user is relatively long (for example, if it is longer than a predetermined difficulty determination time), it can be assumed that the question is in a field that the user feels weak in.

Further, in s5, the above-mentioned (3) to (5) are acquired as the behavior of the user during the test.

The guidance generation section 11d generates the guidance of learning guidance for the user based on the behavior of the user during the test, the level of understanding of the user of each of the questions, the field of questions that the user feels weak in, etc. The personality etc., of the user are reflected in the behavior of the user during the test. In other words, learning guidance that takes into account the behavior of the user during the test is tailored to the personality, etc., of the user. Therefore, in the example, learning guidance tailored to the personality, etc., of the user can be provided, and the learning efficiency of the user can be improved.

Note that the processing related to s2 to s5 may be performed in batch processing.

### <4. Modified example>

### · First modified example

When the user reviews the answers, for questions of which answers have been modified, the server device 1 may be configured to compare the answer before the modification with the answer after the modification to determine what kind of modification the user has made. The answer before the modification can be acquired from the operation history information.

For example, if the server device 1 determines that the modification of the answer made by the user is due to a calculation error, typographical error, etc., the server device 1 may generate guidance with content that encourages calmness when answering questions. Further, even when the server device 1 estimates that the answer after the modification has a higher degree of understanding than the answer before the modification, the server device 1 may generate guidance with content that encourages calmness when answering questions. In addition, if the server device 1 estimates that the level of understanding of the answer after the modification is lower than the level of understanding of the answer before the modification, the server device 1 may generate guidance with content that encourages confidence in one's own answer.

In addition, for a user who has not taken the action to first understand the contents of all the questions that are being asked at the beginning of the exam and a user who has had questions that were not selected during the test period, the server device 1 may generate guidance that prompts the user to answer questions in the specialty of the user (for example, guidance that prompts the user to first understand the contents of all the questions being asked at the beginning of the test).

In addition, for a user who has not reviewed the answer to each of the questions and a user who has made calculation errors or typographical errors in the answers, the server device 1 may generate guidance with content that encourages the user to review the answers during the test.

In this way, the server device 1 generates guidance of learning guidance for the user using the behavior of the user during the test.

### · Second modified example

The scoring section 11a, the understanding level estimation section 11b, the transition acquisition section 11c, and the guidance generation section 11d described in the above example are provided in the control unit 21 of the user terminal 2, and the user terminal 2 may have a configuration in which the processing related to s2 to s5 are executed.

It should be noted that the disclosure is not limited to the above-described embodiments, and that the components can be modified and embodied in the implementation stage without departing from the spirit of the disclosure. Moreover, various inventions can be formed by appropriately combining multiple components disclosed in the above embodiments. For example, some components may be deleted from all the components shown in the embodiments. Furthermore, components from different embodiments may be combined as appropriate. Further, the order of each of steps in the flowcharts shown in the description of all the examples above is just an example, and may be changed as appropriate within the possible range.

Furthermore, the correspondence between the configuration according to the disclosure and the configuration according to the above-described embodiments can be described as follows.

### <Additional notes>

### [Note 1]

A learning support device (1) is applied to a system in which a user operates a terminal (2) to take a test having multiple questions.

The learning support device (1) includes a transition acquisition section (11c), an understanding level estimation section (11b), and a guidance generation section (11d). The transition acquisition section (11c) acquires transition of answer status of the user to the questions on the test based on operation history information indicating a history of input operations performed by the user on the terminal (2) when taking the test;
the understanding level estimation section (11b) estimates level of understanding of the user using scoring results of answers of the user to the respective questions on the test; and
the guidance generation section (11d) generates guidance regarding learning guidance for the user based on the transition of the answer status of the user acquired by the transition acquisition section (11c) and the level of understanding of the respective questions on the test estimated by the understanding level estimation section (11b).

### [Note 2]

In the learning support device (1) according to note 1, the operation history information includes a question selection operation that switches a question on the test that is being focused on and a character input operation that inputs a character string into an answer column of the question on the test that is being focused on.

### [Note 3]

In the learning support device (1) according to note 1 or 2, the transition acquisition section (11c) acquires whether or not the user has reviewed the answer, and whether or not the answer has been modified at the time of review as the transition of the answer status of the user for the questions on the test.

### [Note 4]

In the learning support device (1) according to note 3, the guidance generation section (11d) generates guidance regarding learning guidance for the user using also the scoring results of the answers before the modification for a question for which the user has reviewed the answer and modified the answer during the review.

### [Note 5]

In the learning support device (1) according to any one of notes 1 to 4, the transition acquisition section (11c) acquires whether or not the user has performed a confirmation procedure to understand contents of all the questions on the test before starting to answer the questions on the test as the transition of the answer status of the user to the questions on the test.

### [Note 6]

In the learning support device (1) according to any one of notes 1 to 5, the understanding level estimation section (11b) estimates the level of understanding of the user of the questions on the test using the order of the user answering the questions on the test and the answer time of the questions on the test.

### Description of Reference Numerals

1: Server device
2: User terminal
5: Network
11: Control unit
11a: Scoring section
11b: Understanding level estimation section
11c: Transition acquisition section
11d: Guidance generation section
12: Question database (Question DB)
13: Communication section
21: Control unit
21a: Answer acquisition section
21b: Operation history information generation section
22: Display
23: Operation section
24: Communication section

## Claims

1. A learning support device (1) applied to a system in which a user operates a terminal (2) to take a test having a plurality of questions, comprising:
a transition acquisition section (11c), acquiring transition of answer status of the user to the questions on the test based on operation history information indicating a history of input operations performed by the user on the terminal (2) when taking the test;
an understanding level estimation section (11b), estimating level of understanding of the user using scoring results of answers of the user to the respective questions on the test; and
a guidance generation section (11d), generating guidance regarding learning guidance for the user based on the transition of the answer status of the user acquired by the transition acquisition section (11c) and the level of understanding of the respective questions on the test estimated by the understanding level estimation section (11b).

2. The learning support device (1) according to claim 1, wherein the operation history information comprises a question selection operation that switches a question on the test that is being focused on and a character input operation that inputs a character string into an answer column of the question on the test that is being focused on.

3. The learning support device (1) according to claim 1 or 2, wherein the transition acquisition section (11c) acquires whether or not the user has reviewed the answer, and whether or not the answer has been modified at the time of review as the transition of the answer status of the user for the questions on the test.

4. The learning support device (1) according to claim 3, wherein the guidance generation section (11d) generates guidance regarding learning guidance for the user using also the scoring result of the answer before modification for a question for which the user has reviewed the answer and modified the answer during the review.

5. The learning support device (1) according to claim 1 or 2, wherein the transition acquisition section (11c) acquires whether or not the user has performed a confirmation procedure to understand contents of all the questions on the test before starting to answer the questions on the test as the transition of the answer status of the user to the questions on the test.

6. The learning support device (1) according to claim 1, wherein the understanding level estimation section (11b) estimates the level of understanding of the user of the questions on the test using the order of the user answering the questions on the test and the answer time of the questions on the test.

7. A learning support method in which a computer of a learning support device (1) applied to a system that allows a user to operate a terminal (2) and take a test with a plurality of questions executes:
a transition acquisition step of acquiring transition of answer status of the user to the questions on the test based on operation history information indicating a history of input operations performed by the user on the terminal (2) when taking the test;
an understanding level estimation step of estimating level of understanding of the user using scoring results of answers of the user to the respective questions on the test; and
a guidance generation step of generating guidance regarding learning guidance for the user based on the transition of the answer status of the user acquired by the transition acquisition step and the level of understanding of the respective questions on the test estimated by the understanding level estimation step.

8. A learning support program which causes a computer of a learning support device (1) applied to a system that allows a user to operate a terminal (2) and take a test with a plurality of questions to execute:
a transition acquisition step of acquiring transition of answer status of the user to the questions on the test based on operation history information indicating a history of input operations performed by the user on the terminal (2) when taking the test;
an understanding level estimation step of estimating level of understanding of the user using scoring results of answers of the user to the respective questions on the test; and
a guidance generation step of generating guidance regarding learning guidance for the user based on the transition of the answer status of the user acquired by the transition acquisition step and the level of understanding of the respective questions on the test estimated by the understanding level estimation step.
